# EUROPÄISCHE PATENTSCHRIFT

(11) **EP 2 870 308 B1**
(45) Veröffentlichungstag und Bekanntmachung des Hinweises auf die Patenterteilung: **03.08.2016**
(21) Anmeldenummer: 13732890.2
(22) Anmeldetag: 26.06.2013
(51) Int. Cl.: E04H 12/20, F24J 2/54, H02S 20/00, F24J 2/52

(54) **SYSTEM ZUR NACHRÜSTUNG DEZENTRALISIERTER ENERGIEMODULE IN BAHNNETZEN**
SYSTEM FOR RETROFITTING LOCAL ENERGY MODULES IN RAIL NETWORKS
SYSTÈME DE MISE À NIVEAU DE MODULES D'ALIMENTATION EN ÉNERGIE DÉCENTRALISÉS DANS DES RÉSEAUX FERROVIAIRES

(30) Priorität: 04.07.2012 CH 10362012
(43) Veröffentlichungstag der Anmeldung: 13.05.2015
(73) Patentinhaber: S. E. Track AG, 6300 Zug (CH)
(72) Erfinder: MEIER, Balthasar, CH-8703 Erlenbach (CH); OTT, Christoph, CH-3076 Worb (CH)
(74) Vertreter: BOVARD AG
(86) Internationale Anmeldenummer: PCT/EP2013/063361
(87) Internationale Veröffentlichungsnummer: WO 2014/005897

(56) Entgegenhaltungen:
- CH-A2- 701 857
- US-A- 4 697 396
- US-A1- 2010 294 265

## Beschreibung

### Sachgebiet der Erfindung

Die vorliegende Erfindung betrifft ein System zur Aufstellung von dezentralisierten Energiequellen, welche z.B. über einer bestehenden Bahnstrecke installiert werden können. Insbesondere, jedoch nicht ausschliesslich, betrifft die Erfindung ein System zur nachträglichen Montage von Solar- und/öder Windanlagen auf bestehenden Masten oder sonstigen strukturellen Elementen im Bahnbereich.

### Stand der Technik

Es ist z.B. aus der europäischen Patentanmeldung EP0802324 oder der deutschen Patentanmeldung DE19530305 bekannt, die leere Umgebung und die bestehenden Strukturen abseits einer Bahnstrecke für die Erzeugung von Energie zu verwenden, und zwar durch die Bereitstellung von Wind- oder Solarkraftanlagen. Solche Anlagen erfordern jedoch sehr grosse, sehr stabile Strukturen (etwa Masten aus bespanntem Beton), um die Kräfte, welche durch die Anwesenheit der Paneele bzw. Turbinen verursacht werden, zu bewältigen. Deshalb können diese Systeme nur beim Neubau bzw. bei der Sanierung der Gleisanlagen aufgestellt werden, welches zu einer Unterbrechung des Bahnverkehrs führt. Aus dem Dokument CH 701 857 A2 ist eine Anbringung von Solarmodulen quer zu Leitungsmasten an Verkehrsstrecken, wie z.B. Bahnlinien bekannt.

### Offenbarung der Erfindung

Es ist daher eine Aufgabe der vorliegenden Erfindung, ein neues System zur nachträglichen Aufstellung von Energiemodulen im Bahnbereich vorzuschlagen, welche nicht die Nachteile des Standes der Technik aufweisen.

Dabei ist es insbesondere die Aufgabe der vorliegenden Erfindung, ein System zur Nachrüstung einer Bahnstrecke mit Energiemodulen bereitzustellen, ohne jedoch den Bahnverkehr während längerer Zeiten zu unterbrechen.

Gemäss der vorliegenden Erfindung werden diese Ziele vor allem durch die Elemente der beiden unabhängigen Ansprüche erreicht. Weitere vorteilhafte Ausführungsformen gehen ausserdem aus den abhängigen Ansprüchen und der Beschreibung hervor.

Insbesondere werden die Ziele der Erfindung dadurch erreicht, dass ein System zur Verfügung gestellt wird, welches zur Nachrüstung von Energieversorgungsmodulen im Bereich einer Verkehrsstrecke dient, welche Verkehrsstrecke entlang beider Längsseiten eine Mehrzahl von Trägermasten aufweist, wobei das System: eine Mehrzahl von Quertragseilen aufweist, welche sich quer zur Verkehrsstrecke zwischen gegenüberliegenden Trägermasten über die Verkehrsstrecke erstrecken, und eine Mehrzahl von Solarpaneelen aufweist, welche auf die Quertragseile über der Verkehrsstrecke montierbar sind, wobei das System für jeden Trägermast mindestens ein längliches Anbauelement aufweist, welches an dem Trägermast befestigbar ist, und welches die Steifigkeit des Trägermasts über einen Grossteil der Länge des Trägermasts verstärkt; wobei das System mindestens ein erstes Umlenkelement aufweist, welches an einem oberen Bereich des Trägermasts befestigbar ist, und mittels welchem ein Quertragseil von seiner Quer-Orientierung in eine im Wesentlichen senkrechte Orientierung umleitbar ist; wobei das System mindestens ein Befestigungselement aufweist, welches an einem unteren Bereich des Trägermasts befestigbar ist, und mittels welchem ein im Wesentlichen senkrecht orientiertes Tragseil an den genannten unteren Bereich gespannt verankerbar ist; wobei die Kräfte, welche von den Solarpaneelen auf das Quertragseil ausgeübt werden, durch das Quertragseil über das mindestens eine erste Umlenkelement und in den unteren Bereich des Trägermasts geleitet werden. Sämtliche Systemelemente können derart gestaltet werden, dass sie auf die bestehende Infrastruktur der Verkehrsstrecke gebaut bzw. nachgerüstet werden können, und zwar ohne, dass der Verkehr für eine längere Periode unterbrochen werden muss.

Gemäss einer Ausführungsvariante der Erfindung werden die Trägerseile an einem Fundament des Trägermasts befestigt.

Gemäss einer weiteren Ausführungsvariante der Erfindung weist das System ein zweites Umlenkelement auf, welches am oberen Bereich des Trägermasts befestigbar ist; und mindestens ein Steuerungsseil, welches am unteren Bereich des Trägermasts befestigbar ist und welches dem Ausrichten mindestens eines Solarpaneels dient, wobei das Ausrichten des Solarpaneels durch eine Verstellung des mindestens einen zweiten Umlenkelements durchführbar ist. Somit kann z.B. das Verstellen der Solarpaneele unabhängig von dem Spannen der Trageseile stattfinden. Die Umlenkelemente können zum Beispiel als Seilscheiben gebildet werden.

Gemäss einer weiteren Ausführungsvariante der Erfindung weist das System mindestens eine Windturbine auf, welche derart gebildet ist, dass sie an einem zweiten oberen Bereich des Trägermasts befestigbar ist.

Gemäss einer weiteren Ausführungsvariante der Erfindung weist das System mindestens eine erste Kommunikationseinheit auf, mittels welcher eine drahtlose Kommunikationsverbindung zwischen mindestens einem Verkehrsbeteiligten auf der Verkehrsstrecke und mindestens einem Mobilfunknetz und/oder mindestens einem Festnetz herstellbar ist.

Gemäss einer weiteren Ausführungsvariante der Erfindung weist das System auf:
eine Energiespeichereinheit;
eine Einspeiseeinheit zur Einspeisung von Strom, welcher durch das mindestens eine Solarpaneel und/oder durch die mindestens eine Windturbine erzeugt wird, in die Energiespeichereinheit und/oder in ein Stromversorgungsnetz der Verkehrsstrecke;
einen Stromumwandler, mittels welchem elektrische Eigenschaften des durch das mindestens eine Solarpaneel und/oder durch die mindestens eine Windturbine erzeugten Stroms an die Lade- bzw. Einspeisungsanforderungen der Energiespeichereinheit bzw. des Stromversorgungsnetzes der Verkehrsstrecke anpassbar sind;
eine Steuerungseinheit zur Steuerung von mechanischen und/oder elektrischen Funktionen von Komponenten des Systems, welche am Trägermast und/oder auf den Tragseilen montiert sind;
die genannte mindestens eine erste Kommunikationseinheit;
und/oder eine zweite Kommunikationseinheit, mittels welcher Daten und/oder Steuerungsbefehle zwischen der Steuerungseinheit und einer ferngelegenen Zentralsteuerungseinheit austauschbar sind.

Gemäss einer weiteren Ausführungsvariante der Erfindung weist das Anbauelement ein Gehäuse auf, in welchem die Energiespeichereinheit, die Einspeiseeinheit, der Stromumwandler, die Steuerungseinheit, die erste Kommunikationseinheit und/oder die zweite Kommunikationseinheit untergebracht werden können.

Gemäss einer weiteren Ausführungsvariante der Erfindung wird die erste Kommunikationseinheit oben auf jedem der genannten Trägermasten oder auf der Windturbine montiert.

Gemäss einer weiteren Ausführungsvariante der Erfindung weist das Anbauelement ein längliches, im Wesentlichen prismatförmiges Profil mit einem im Wesentlichen trapezförmigen Querschnitt auf.

Gemäss einer weiteren Ausführungsvariante der Erfindung weist das System mindestens ein aufrechtes Solarpaneel auf, welches an das genannte Anbauelement montiert werden kann.

Gemäss einer weiteren Ausführungsvariante der Erfindung weisen die aufrechten Solarpaneele mindestens ein Einstellelement auf, mittels welchem Einstellelement das aufrechte Solarpaneel mit einer festen oder beweglichen südlichen Orientierung einstellbar ist.

Nachfolgend werden die Ausführungsvarianten der vorliegenden Erfindung anhand von Beispielen beschrieben. Die Beispiele der Ausführungen werden durch folgende beigelegte Figuren 1 bis 9 illustriert, wobei:
Figur 1 in schematischem Querschnitt eine Darstellung eines Trägermasts zeigt, welcher aus dem Stand der Technik bekannt ist.
Figur 2 in schematischem Querschnitt eine Darstellung eines Trägermasts zeigt, welcher für den Einsatz in einem erfindungsgemässen System geeignet ist.
Figuren 3 und 4 in schematischem Querschnitt Darstellungen eines mit verstellbaren Solarpaneelen ausgestatteten Trägermasts zeigen, welcher für den Einsatz in einem erfindungsgemässen System geeignet ist.
Figuren 5 und 6 in schematischem Querschnitt eine Darstellung eines mit integrierten elektronischen Kommunikations-Bauteilen ausgestatteten Trägermasts zeigen, welcher für den Einsatz in einem erfindungsgemässen System geeignet ist.
Figur 7 in schematischem Querschnitt eine Darstellung eines mit einem gekrümmten, senkrechten Solarpaneel ausgestatteten Trägermasts zeigt, welcher für den Einsatz in einem erfindungsgemässen System geeignet ist.
Figuren 8 und 9 in schematischer Planansicht zwei mögliche Anordnungen der Solarpaneele bzw. Trägermasten der Erfindung über eine Verkehrsstrecke zeigen.

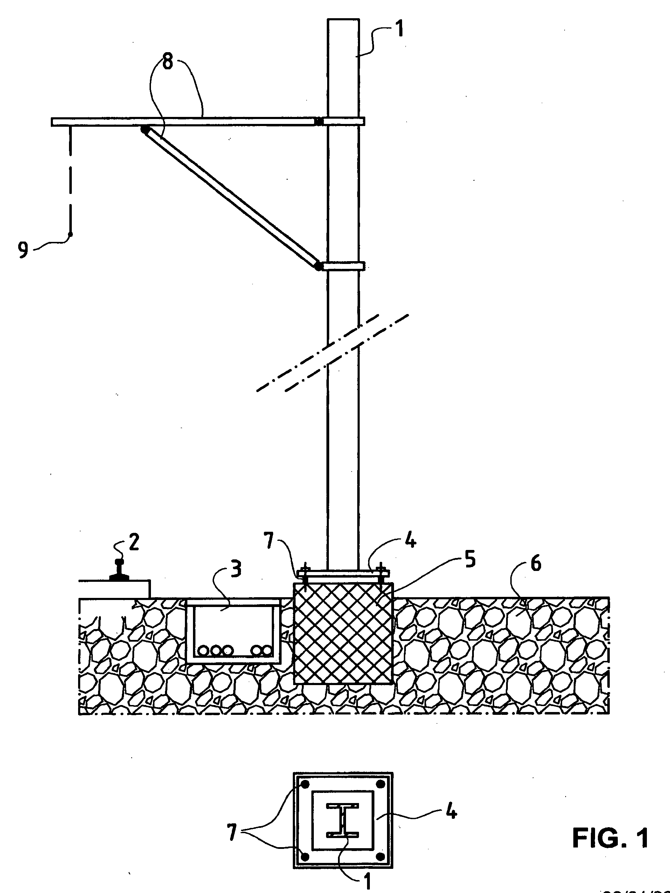

Ein gewöhnlicher Trägermast, wie in der Figur 1 abgebildet ist, weist z.B. ein lotrechtes, H-förmiges Profil 1 aus z.B. verzinktem Stahl auf. Der Mast ist auf eine Grundplatte 4 geschweisst, und an einem Fundament 5 z.B. mittels Schrauben befestigt. Das Fundament 5 kann z.B. vorgefertigt und in das Kiesbett 6 gelegt werden, oder es kann vor Ort aus Beton gegossen werden. Figur 1 zeigt auch eine Schiene 2 der Verkehrsstrecke, sowie einen Leitungskanal 3 für Strom-, Kommunikations- und sonstige Versorgungsleitungen.

Der in der Figur 1 abgebildete Mast 1 trägt auf bekannte Weise eine von starren Querträgern 8 suspendierte Hochspannungsleitung 9 für den Antrieb des Zugverkehrs, welcher auf der Verkehrsstrecke fährt. In dieser Beschreibung wird eine Schienenbahn als Beispiel genommen, wobei unter dem Begriff Verkehrsstrecke auch andere Arten von Transport- oder Kommunikationsverbindungen, welche im Freien stehen, und welche eine Stromversorgung benötigen (etwa für Antrieb, Beleuchtung oder Kommunikation) wie z.B. Strassen, Autobahnen, Kanäle, Luftseilbahnen, Rennbahnen, Zahnradbahnen, Fussgängerwege usw. zu verstehen sind.

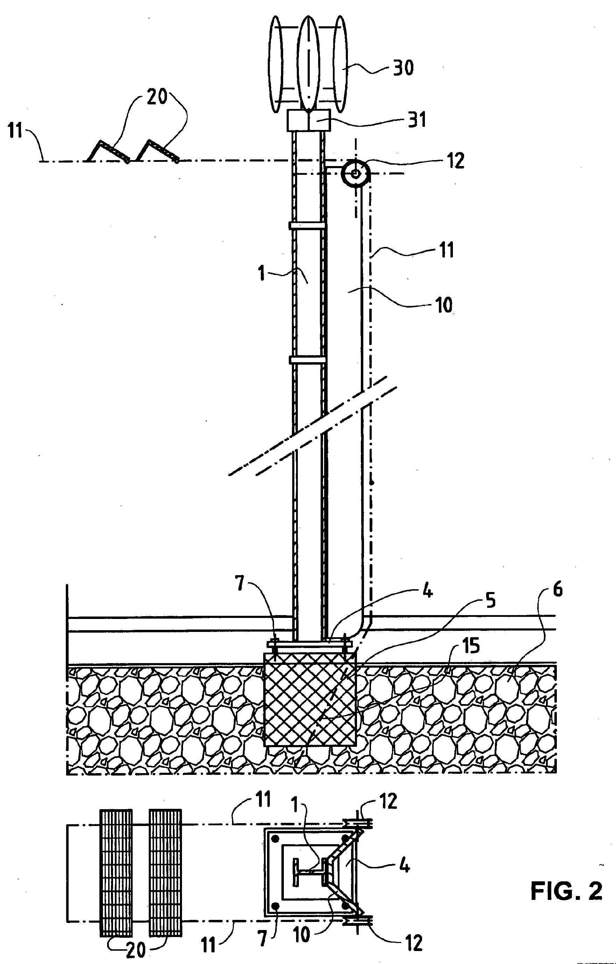

Figur 2 zeigt einen ähnlichen, H-förmigen Trägermast 1 welcher mit einem erfindungsgemässen Anbauelement 10 nachgerüstet ist. In einer oberen Region des Masts 1 (auf dessen oberer Spitze in diesem Beispiel) ist ein vertikaler Windkraftrotor 30 mittels einer Befestigung 31 aufgesetzt. Solarpaneele 20 sind im Raum über die Verkehrstrecke von Querseilen 11 suspendiert.

Die Querseile 11 werden im unteren Bereich des Masts 1 bzw. am Fundament 5 befestigt, und laufen entlang des Anbauelements 10 bis zu einem oberen Bereich, wo sie jeweils über ein Umlenkelement 12 (etwa eine Seilscheibe) von der senkrechten in die waagerechten Orientierung umgelenkt werden. Vorzugsweise werden die Querseile 11 mittels Mikropfählen am unteren Bereich befestigt. Mikropfahle können z.B. in ein bestehendes Fundament und/oder in den Bodengrund nachträglich eingesetzt werden, ohne die bestehenden Strukturen (Beton, Kies usw.) zu stören, und bieten einen starken Befestigungspunkt, an welchem ein Seil 11 gespannt befestigt werden kann.

Die Querseile 11 werden genügend gespannt, um die zu erwartenden Kräfte, welche auf die Solarpaneele (Gewicht der Paneele, Wind-, Regen oder Schneelast, Vibration usw.) wirken, zu tragen.

Das beispielhaft abgebildete Anbauelement 10 weist einen trapezförmigen Querschnitt auf, und dient in erster Linie zur Versteifung und Verstärkung des Trägermasts 1, damit die Spannungskräfte in den waagerechten Abschnitten der Querseile 11 über die Umlenkelemente 12 bis in den Bodenbereich 5, 6 geleitet werden. Die trapezförmige Form des Anbauelements weist eine schmalere Seite auf, welche an den Mast befestigt wird, und eine breitere, offene Seite, und bildet dabei einen konkaven Raum, in welchem Systemkomponenten untergebracht werden können. Die Flügel der breiteren Seite bieten auch einen Rahmen, auf welchem die Seilscheiben 12 rotativ montiert werden können.

Die Solarpaneele 20 können schräg auf den Querseilen befestigt werden, wie in der Figur 2 abgebildet.

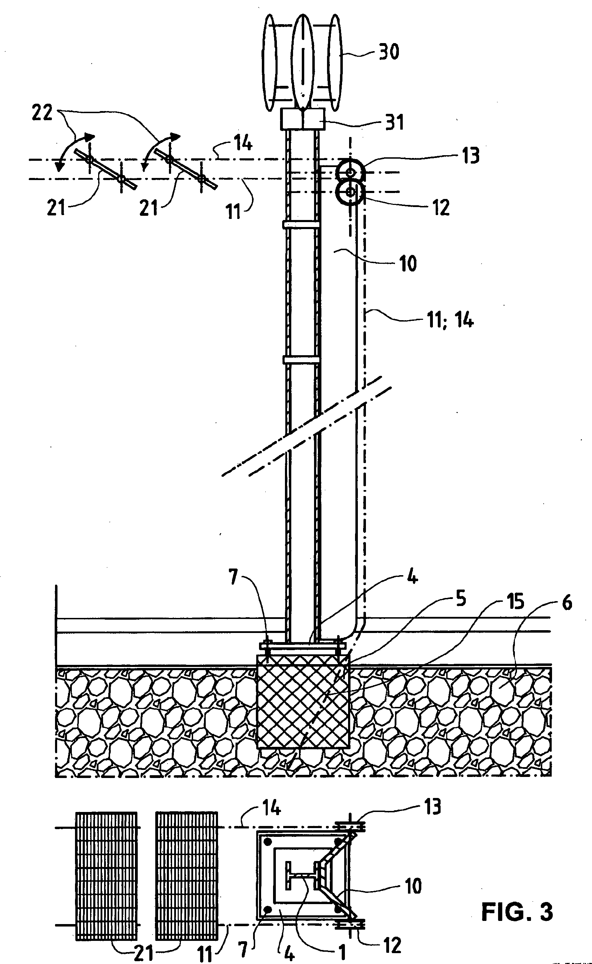

Die Figur 3 zeigt eine weitere Variante des erfindungsgemässen Nachrüstsystems. In dieser Variante wird die Neigung der Solarpaneele durch die Querseile 11, 14 gesteuert. Eines (13) der Umlenkelemente 12 und 13 kann, z.B. etwas höher als das andere (12) versetzt werden, wobei, wenn die zwei Querseile 11 und 14 längs gegeneinander bewegt werden, eine Änderung der Neigung der Solarpaneele erfolgt. Die Solarpaneele 21 können z.B. mittels rotativer (etwa gelagert bzw. mit Scharnieren versehenen) Fassungen an den Querseilen 11 und 14 befestigt werden.

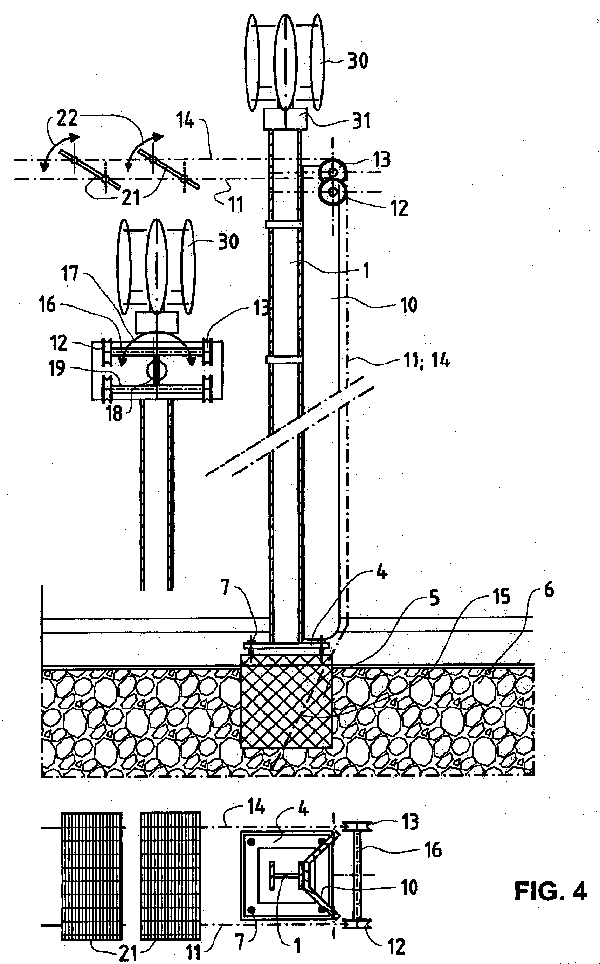

Eine weitere Variante der Steuerung der Solarpaneele ist in der Figur 4 abgebildet. In dieser Variante werden die Umlenkelemente (z.B. Seilscheiben) auf Rotationsachsen 16, 19 montiert, welche zusammen um eine gemeinsame, orthogonale Verstellungsachse 18 rotierbar sind. Die Verstellung der Neigung der Solarpaneele erfolgt somit durch eine Verdrehung der Rotationsachsen 16 und 19 um die Verstellungsachse 18.

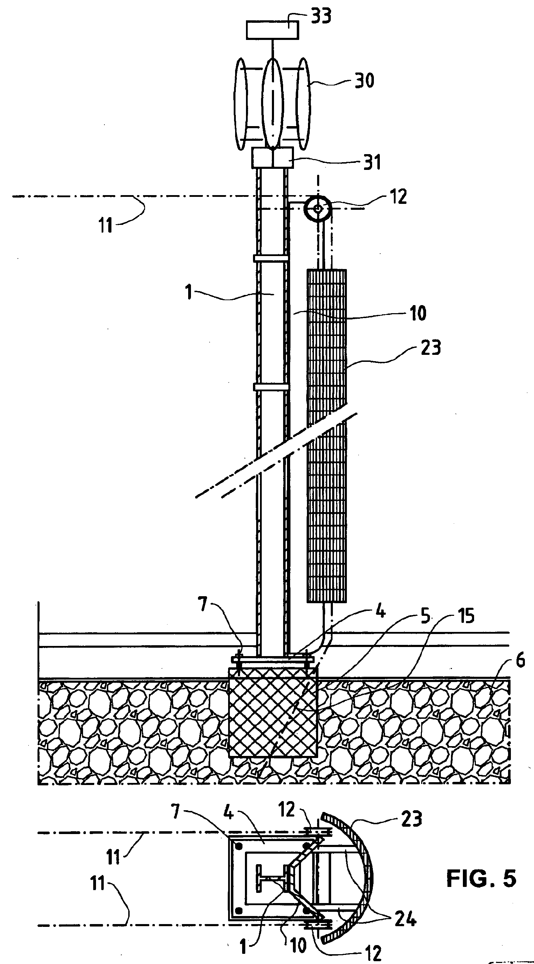

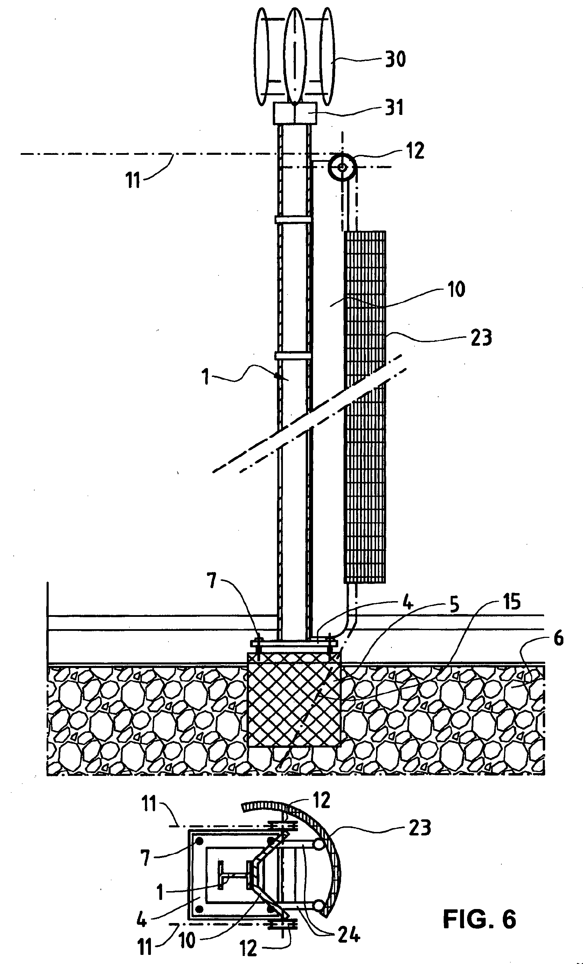

Eine weitere Variante des erfindungsgemässen Nachrüstsystems ist in der Figur 5 abgebildet. In dieser Variante, welche mit oder ohne die verschiedenen oben beschriebenen Solarpaneele 20, 21 eingesetzt werden kann, weist das Anbauelement 10 ein vertikales Solarpaneel 23 auf, welches an das Anbauelement 10 angebracht werden kann. Dieses vertikale Solarpaneel 23 kann so gebildet sein, dass es sowohl als Solarenergiekollektor, als auch als Abdeckung für den Innenraum des Anbauelements 10 dient. Figur 6 zeigt eine ähnliche Variante, in welcher das vertikale Solarpaneel 23 schwenkbar um eine vertikale Achse aufgestellt ist, und zwar z.B. auf Lagerungen 24, damit die südliche Orientierung des Solarpaneels 23 einmalig oder ständig ver- bzw. eingestellt werden kann. Das vertikale Solarpaneel kann als ein längliches, teilzylindrisches Profil gebildet werden, wie in den Figuren 5 und 6 abgebildet.

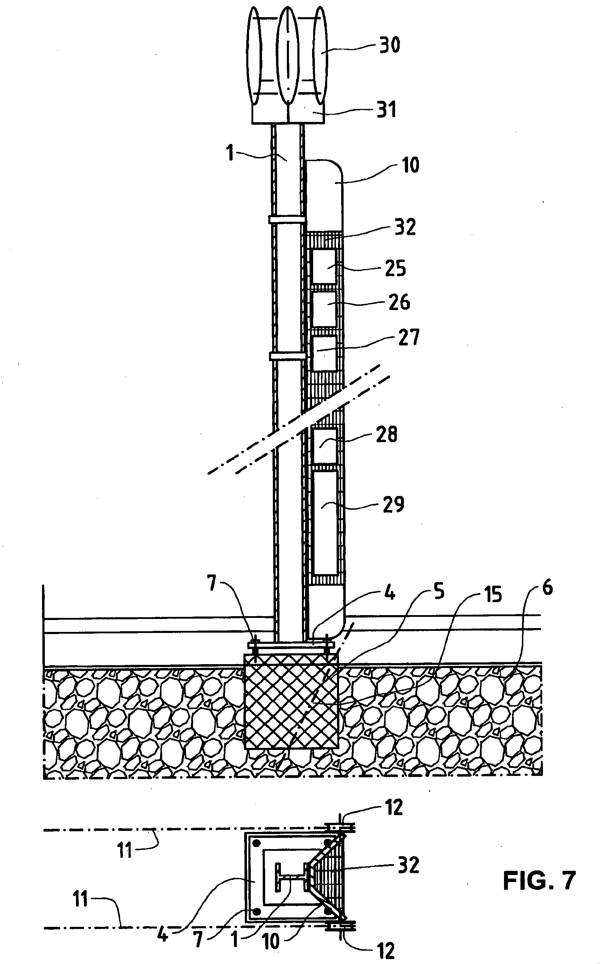

Figur 7 zeigt eine weitere Variante eines erfindungsgemässen Nachrüstsystems, in welchem ein oder mehrere der Systemkomponenten 25, 26, 27, 28, 29 im Innenraum des Anbauelements unterbracht werden.

Es kann zum Beispiel eine Energiespeichereinheit (29), etwa ein Akku oder Kondensator, untergebracht werden, um den Strom, welcher durch die Solarpaneele (20, 21) und/oder durch die Windturbine (30) erzeugt wird, zu speichern. Die gespeicherte Energie kann anschliessend in das Stromnetz 9 der Verkehrsstrecke eingespeist werden, oder für andere Zwecke verwendet werden, wie z.B. als Stromquelle für die verschiedenen anderen Systemkomponenten.

Das System kann z.B. einen Stromumwandler bzw. Umformer (25), aufweisen, welcher auch im Innenraum des Anbauelements untergebracht werden kann. Mittels eines solchen Stromumwandlers bzw. Umformers (25) können die statischen und/oder dynamischen elektrischen Eigenschaften (Frequenz, Spannung usw.) z.B. an die Lade- bzw. Einspeisungsanforderungen der Energiespeichereinheit (29) bzw. des Stromversorgungsnetzes (9) der Verkehrsstrecke (2) angepasst werden.

Eine Steuerungseinheit (28) zur Steuerung von mechanischen und/oder elektrischen Funktionen des Systems kann auch im Innenraum untergebracht werden. Eine solche Steuereinheit kann zum Beispiel dazu verwendet werden, um eine längsseitige Versetzung eines bzw. mehrerer der Querseile 11, 14 zu betätigen, und dadurch die Neigung der Solarpaneele 20, 21 zu ändern. Da die Querseile 11, 14 durch das Anbauelement durch bzw. nahe dem Anbauelement verlaufen, kann die Steuereinheit die längliche Position der Querseilen z.B. mittels einer Servo- oder Zugeinheit ändern.

Weitere Systemkompontenten können ebenfalls im Innenraum untergebracht werden, wie z.B. eine Kommunikationseinheit (33). Unter diesem Begriff wird zum Beispiel eine drahtlose (etwa GSM- oder WiFi usw.) und/oder eine festverbundene Kommunikationseinheit verstanden. Eine solche Kommunikationseinheit, welche in vielen entlang der Verkehrsstrecke verteilten Masten vorhanden ist, kann z.B. einen kontinuierlichen Kommunikationsdienst (etwa Internet, Telefon, Fernsehen) für Verkehrsteilnehmer auf der Verkehrsstrecke bilden. Ausserdem kann eine solche Kommunikationseinheit Informationen zur Funktion des Systems und/oder der Verkehrsstrecke mit einer entfernten Steuerzentrale austauschen.

Die Steuereinheit 28 kann zum Beispiel mit der Steuerzentrale kommunizieren, um die Stromeinspeisung in das Stromnetz 9 zu optimieren. So kann die Einspeisung, zum Beispiel, an einem bestimmten Mast 1 zeitlich gesteuert werden, damit gespeicherte Energie erst dann ins Bahnnetz bzw. die Leitung 9 eingespeist wird, wenn ein Zug gerade vorbei fährt. Auf diese Weise kann die Summe des Strom über das Stromnetz bzw. über die Leitung 9 minimiert werden.

Auf ähnliche Weise kann die Steuereinheit 28 so konfiguriert werden, dass die Kommunikationseinheit(en) nur dann aktiv wird (werden), wenn sie benötigt wird (werden) (zum Beispiel beim Annähern eines Zuges). So kann die Energielast der Kommunikation (z.B. Internet oder Mobiltelefonverbindungen) minimiert werden, wobei die Sicherheit optimiert wird. Diese Optimierung kann durch die Steuereinheit 28 ausgeführt werden und/oder in Abhängigkeit von Instruktionen bzw. Informationen von der Steuerzentrale.

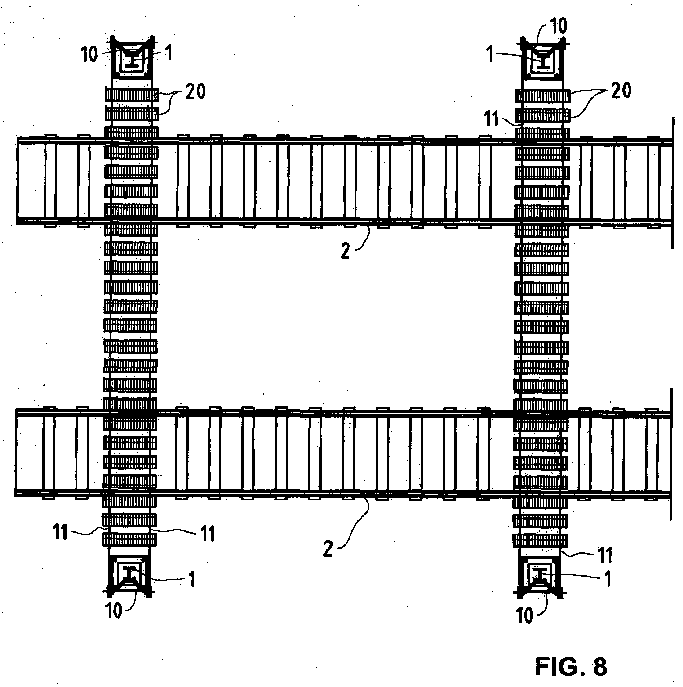

Figur 8 zeigt eine erfindungsgemässe Anordnung von Solarpaneelen 20 (statisch oder verstellbar), in welcher sich die Querseile 11 z.B. paarweise quer über die Verkehrsstrecke (in diesem Beispiel eine zweispurige Bahnstrecke), zwischen zwei Trägermasten 1 erstrecken. Jeder Trägermast ist mit einem erfindungsgemässen Anbauelement 10, wie oben beschrieben, nachgerüstet. Die Solarpaneele 20 sind jeweils an ein Paar der Querseile befestigt.

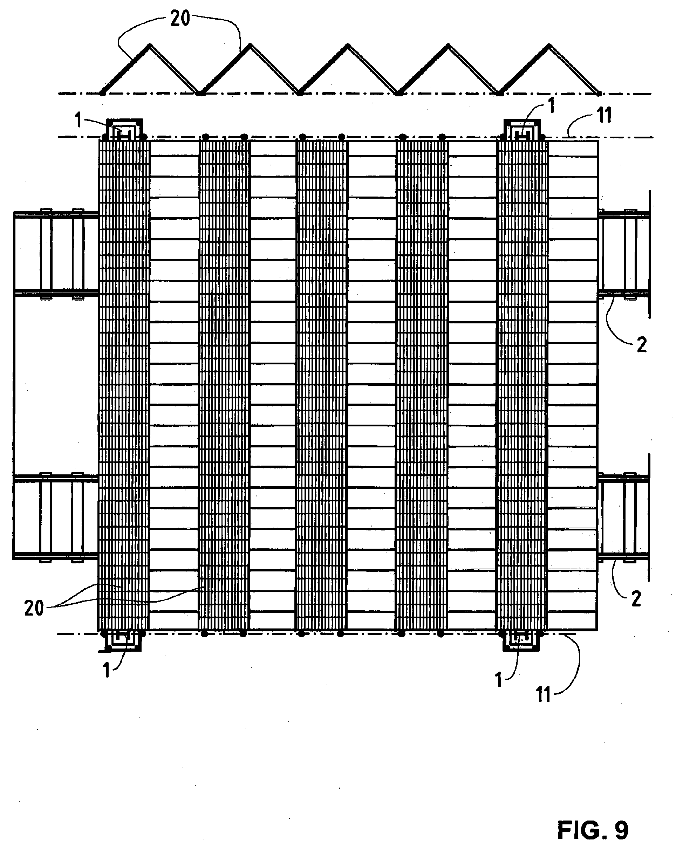

Figur 9 zeigt eine weitere erfindungsgemässe Anordnung von Solarpaneelen 20 über eine zweispurige Bahnstrecke. In diesem Beispiel werden die Querseile 11 im Wesentlichen parallel zur Verkehrsstrecke zwischen Trägermasten 1 angeordnet. Anbauelemente (nicht abgebildet) können zur Verstärkung der Masten 1 eingesetzt werden, und die Solarpaneele 20 können quer über die Gleise orientiert werden, wobei sich jedes Solarpaneel zwischen zwei Querseilen erstreckt.

In beiden der in den Figuren 8 und 9 abgebildeten Beispielen können die Solarpaneele vorzugsweise so angeordnet sein, dass sie den vorbeifahrenden Verkehr beschatten. Dadurch wird weitere Energie, zum Beispiel für die Klimatisierung der Züge, eingespart.

Wie eingangs erwähnt besteht ein gemeinsames Ziel der verschiedenen erfindungsgemässen Varianten darin, dass ein Stromerzeugungssystem auf bestehende Infrastruktur nachgerüstet werden kann und dass diese ohne längeren Unterbruch des Verkehrs stattfinden kann.

Zum Schluss sei darauf hingewiesen, dass die hier beispielhaft beschriebenen Ausführungsvarianten nur eine Auswahl an möglichen Realisierungen des erfindungsgemässen Gegenstandes nach Anspruch 1 darstellen und keinesfalls als limitierend angeschaut werden sollen.

## Patentansprüche

1. System zur Nachrüstung von Energieversorgungsmodulen im Bereich einer Verkehrsstrecke (2), welche Verkehrsstrecke (2) entlang beider Längsseiten eine Mehrzahl von Trägermasten (1) aufweist, wobei das System:
eine Mehrzahl von Quertragseilen (11, 14) aufweist, welche quer zur Verkehrsstrecke (2), zwischen gegenüberliegenden Trägermasten (1) über die Verkehrsstrecke (2) erstreckbar sind, und
eine Mehrzahl von Solarpaneelen (20, 21) aufweist, welche auf die Quertragseile (11, 14) über die Verkehrsstrecke (2) montierbar sind,
**dadurch gekennzeichnet, dass**, für jeden Trägermast (1) aus der Mehrzahl der Trägermasten (1), das System:
mindestens ein längliches Anbauelement (10) aufweist, welches an jeden der genannten Trägermasten (1) befestigbar ist, und welches die Steifigkeit jedes der genannten Trägermasten (1) über einen Grossteil der Länge jedes der genannten Trägermasten (1) verstärkt;
mindestens ein erstes Umlenkelement (12) aufweist, welches an einem oberen Bereich jedes der genannten Trägermasten (1) befestigbar ist, und mittels welchem eines der genannten Quertragseile (11) von seiner Quer-Orientierung in eine im Wesentlichen senkrechte Orientierung umleitbar ist;
mindestens ein Befestigungselement aufweist, welches an einem unteren Bereich (4, 5, 6) jedes der genannten Trägermasten befestigbar ist, und mittels welchem ein im Wesentlichen senkrecht orientiertes Tragseil (11, 14) an den genannten unteren Bereich (4, 5, 6) gespannt verankerbar ist;
wobei die Kräfte, welche von den Solarpaneelen (20, 21) auf das genannte Quertragseil (11, 14) ausgeübt werden, durch das Quertragseil (11) über das mindestens eine erstes Umlenkelement (12) und in den unteren Bereich (4, 5, 6) jedes der genannten Trägermasten (1) geleitet werden.

2. System gemäss Anspruch 1, wobei der untere Bereich (4, 5, 6) jedes der genannten Trägermasten (1) ein Fundament (5) jedes der genannten Trägermasten (1) ist.

3. System gemäss einem der Ansprüche 1 oder 2, wobei das System:
mindestens ein zweites Umlenkelement (13) aufweist, welches am oberen Bereich jedes der genannten Trägermasten (1) befestigbar ist; und
mindestens ein Steuerungsseil (14) aufweist, welches am unteren Bereich (4, 5, 6) jedes des genannten Trägermasten (1) befestigbar ist und welches dem Ausrichten mindestens eines Solarpaneels (21) dient, wobei das Ausrichten des Solarpaneels (21) durch eine Verstellung des mindestens einen zweiten Umlenkelements (13) durchführbar ist.

4. System gemäss einem der Ansprüche 1 bis 3, wobei das mindestens eine erste Umlenkelement (12) und/oder das mindestens eine zweites Umlenkelement (13) mindestens eine Seilscheibe aufweist.

5. System gemäss einem der Ansprüche 1 bis 4, wobei das System mindestens eine Windturbine (30) aufweist, welche Windturbine (30) derart gebildet ist, dass sie an einem zweiten oberen Bereich jedes genannten Trägermasten (1) befestigbar ist.

6. System gemäss einem der Ansprüche 1 bis 5, wobei das System mindestens eine erste Kommunikationseinheit (33) aufweist, mittels welcher eine drahtlose Kommunikationsverbindung zwischen mindestens einem Verkehrsbeteiligten auf der Verkehrsstrecke (2) und mindestens einem Mobilfunknetz und/oder mindestens einem Festnetz herstellbar ist.

7. System gemäss einem der Ansprüche 1 bis 6, wobei das System die nachstehenden Komponenten aufweist, eine Energiespeichereinheit (29);
eine Einspeiseeinheit (27) zur Einspeisung von Strom, welcher durch das mindestens eine Solarpaneel (20, 21) und/oder durch die mindestens eine Windturbine (30) erzeugt wird, in die Energiespeichereinheit (29) und/oder in ein Stromversorgungsnetz (9) der Verkehrsstrecke (2);
einen Stromumwandler (25), mittels welchem elektrische Eigenschaften des durch das mindestens eine Solarpaneel (20, 21) und/oder durch die mindestens eine Windturbine (30) erzeugten Stroms an die Lade- bzw. Einspeisungsanforderungen der Energiespeichereinheit (29) bzw. des Stromversorgungsnetzes (9) der Verkehrsstrecke (2) anpassbar sind;
eine Steuerungseinheit (28) zur Steuerung von mechanischen und/oder elektrischen Funktionen von Komponenten des Systems, welche am Trägermast und/oder auf den Tragseilen montiert sind;
die genannte mindestens eine erste Kommunikationseinheit (33); und/oder
eine zweite Kommunikationseinheit (26), mittels welcher Daten und/oder Steuerungsbefehle zwischen der Steuerungseinheit (28) und einer ferngelegenen Zentralsteuerungseinheit austauschbar sind.

8. System gemäss Anspruch 6, wobei das Anbauelement (10) ein Gehäuse aufweist, in welchem die Energiespeichereinheit (29), die Einspeiseeinheit (27), der Stromumwandler, (25), die Steuerungseinheit (28), die erste Kommunikationseinheit (33) und/oder die zweite Kommunikationseinheit (26) unterbringbar sind.

9. System gemäss einem der Ansprüche 6 bis 8, wobei die erste Kommunikationseinheit (33) oben auf jedem der genannten Trägermasten (1) oder auf der Windturbine (30) befestigbar ist.

10. System gemäss einem der Ansprüche 1 bis 8, wobei das Anbauelement (10) ein längliches, im Wesentlichen prismaförmiges Profil mit einem im Wesentlichen trapezförmigen Querschnitt aufweist.

11. System gemäss dem Anspruch 10, wobei das System mindestens ein aufrechtes Solarpaneel (23) aufweist, welches an das genannte Anbauelement (10) befestigbar ist.

12. System gemäss dem Anspruch 11, wobei das aufrechte Solarpaneel (23) mindestens ein Einstellelement (24) aufweist, mittels welchen Einstellelements (24) das aufrechte Solarpaneel (23) mit einer festen oder beweglichen südlichen Orientierung einstellbar ist.

## Claims

1. System for retrofitting energy supply modules in the region of a traffic route (2), which traffic route (2) has along both longitudinal sides a multiplicity of support masts (1), whereby the system:
has a multiplicity of transverse supporting cables (11, 14), which are extendable over the traffic route (2), transversely to the traffic route (2), between opposite support masts (1), and
has a multiplicity of solar panels (20, 21), which are mountable on the transverse supporting cables (11, 14) over the traffic route (2),
**characterized in that**, for each support mast (1) of the multiplicity of support masts (1), the system:
has at least one elongated attachment element (10), which is mountable on each of the said support masts (1), and which reinforces the stiffness of each of the said support masts (1) over a majority of the length of each of the said support masts (1);
has at least one first diversion element (12), which is attachable on an upper region of each of the said support masts (1), and by means of which one of the said transverse supporting cables (11) is able to be diverted from its transverse orientation to a substantially vertical orientation;
has at least one fixing element which is attachable on a lower region (4, 5, 6) of each of the said support masts, and by means of which a substantially vertically oriented supporting cable (11, 14) is able to be anchored in a tensioned way on the said lower region (4, 5, 6);
whereby the forces which are exerted by the solar panels (20, 21) on the said transverse supporting cable (11, 14) are conducted through the transverse supporting cable (11) via the at least one first diversion element (12) and into the lower region (4, 5, 6) of each of the said support masts (1).

2. System according to claim 1, whereby the lower region (4, 5, 6) of each of the said support masts (1) is a base (5) of each of the said support masts (1).

3. System according to one of the claims 1 or 2, whereby the system:
has at least one second diversion element (13), which is attachable on the upper region of each of the said support masts (1); and
has at least one control cable (14), which is attachable on the lower region (4, 5, 6) of each of the said support masts (1) and which serves the alignment of at least one solar panel (21), whereby the alignment of the solar panel (21) is able to be carried out by an adjustment of the at least one second diversion element (13).

4. System according to one of the claims 1 to 3, whereby the at least one first diversion element (12) and/or the at least one second diversion element (13) has at least one pulley.

5. System according to one of the claims 1 to 4, whereby the system has at least one wind turbine (30), which wind turbine (30) is designed in such a way that it is attachable on a second upper region of each of the said support masts (1).

6. System according to one of the claims 1 to 5, whereby the system has at least one first communication unit (33), by means of which a wireless communication connection is able to be established between at least one traffic participant on the traffic route (2) and at least one mobile radio network and/or at least one fixed network.

7. System according to one of the claims 1 to 6, whereby the system has the following components
an energy storage unit (29);
a feed unit (27) for feeding current, which is generated by the at least one solar panel (20, 21) and/or by the at least one wind turbine (30), to the energy storage unit (29) and/or to a power supply network (9) of the traffic route (2);
a current converter (25), by means of which electrical characteristics of the current generated by the at least one solar panel (20, 21) and/or by the at least one wind turbine (30) are adaptable to the charging or respectively feed requirements of the energy storage unit (29) or respectively of the power supply network (9) of the traffic route (2);
a control unit (28) for control of mechanical and/or electrical functions of the components of the system, which are mounted on the support mast and/or on the support cables;
the said at least one first communication unit (33); and/or
a second communication unit (26), by means of which data and/or control commands are able to be exchanged between the control unit (28) and a remotely situated central control unit.

8. System according to claim 6, whereby the attachment element (10) has a housing, in which the energy storage unit (29), the feed unit (27), the current converter (25), the control unit (28), the first communication unit (33) and/or the second communication unit (26) are able to be accommodated.

9. System according to one of the claims 6 to 8, whereby the first communication unit (33) is attachable on top of each of the said support masts (1) or on the wind turbine (30).

10. System according to one of the claims 1 to 8, whereby the attachment element (10) has an elongated, substantially prism-shaped form with a substantially trapezoidal cross section.

11. System according to claim 10, whereby the system has at least one upright solar panel (23), which is attachable to the said attachment element (10).

12. System according to claim 11, whereby the upright solar panel (23) has at least one adjustment element (24), by means of which adjustment element (24) the upright solar panel (23) is adjustable with a fixed or movable southern orientation.

## Revendications

1. Système pour l'équipement complémentaire en modules d'alimentation en énergie au niveau d'une voie de circulation (2), laquelle voie de circulation (2) comprend, le long de ses deux côtés longitudinaux, une pluralité de pylônes (1), le système comportant:
une pluralité de câbles porteurs transversaux (11, 14) qui peuvent s'étendre transversalement par rapport à la voie de circulation (2) et au-dessus de celle-ci entre deux pylônes (1) se faisant face de part et d'autre de la voie de transport (2), et
une pluralité de panneaux solaires (20, 21) pouvant être montés sur les câbles porteurs transversaux (11,14) au-dessus de la voie de circulation (2),
**caractérisé en ce que**, pour chaque pylône (1) parmi la pluralité de pylônes (1), le système:
comprend au moins un élément rapporté oblong (10), qui peut être fixé à chacun desdits pylônes (1), et qui augmente la rigidité de chacun desdits pylônes (1) sur une grande partie de la longueur de chacun desdits pylônes (1);
comprend au moins un premier élément de renvoi (12) qui peut être fixé au niveau d'une zone supérieure de chacun desdits pylônes (1), et au moyen duquel un câble porteur transversal (11) peut être redirigé selon une orientation sensiblement verticale depuis son orientation transversale;
comprend au moins un élément de fixation, qui peut être fixé au niveau d'une zone inférieure (4, 5, 6) de chacun desdits pylônes et au moyen duquel un câble porteur orienté sensiblement verticalement (11,14) peut être ancré sous tension à ladite zone inférieure (4, 5, 6);
les forces qui sont exercées par les panneaux solaires (20, 21) sur ledit câble porteur transersal (11, 14) étant transmises par l'intermédiaire du câble porteur transversal (11) via ledit au moins un élément de renvoi (12) et dans la zone inférieure (4, 5, 6) de chacun desdits pylônes (1).

2. Système selon la revendication 1, dans lequel la zone inférieure (4, 5, 6) de chacun desdits pylônes (1) est une base (5) de chacun desdits pylônes (1).

3. Système selon l'une des revendications 1 ou 2, ledit système comportant:
au moins un second élément de renvoi (13), qui peut être fixé au niveau de la zone supérieure de chacun desdits pylônes (1); et
au moins un câble de commande (14) qui peut être fixé au niveau de la zone inférieure (4, 5, 6) de chacun desdits pylônes (1), et qui est utilisé pour l'alignement d'au moins un panneau solaire (21), l'alignement du panneau solaire (21) pouvant être réalisé à l'aide d'un réglage dudit au moins un deuxième élément de renvoi (13).

4. Système selon l'une des revendications 1 à 3, dans lequel ledit au moins un premier élément de renvoi (12) et/ou ledit au moins un deuxième élément de renvoi (13) comporte au moins une poulie.

5. Système selon l'une des revendications 1 à 4, ledit système comprenant au moins une éolienne (30), laquelle éolienne (30) étant agencée de telle sorte qu'elle puisse être fixée à une deuxième zone supérieure de chacun desdits pylônes (1).

6. Système selon l'une des revendications 1 à 5, ledit système comprenant au moins une première unité de communication (33), au moyen de laquelle une liaison de communication sans fil peut être établie entre au moins un des membres du trafic s'écoulant sur la voie de circulation (2) et au moins un réseau mobile et / ou au moins un résau fixe.

7. Système selon l'une des revendications 1 à 6, ledit système comprenant les composants suivants:
une unité de stockage d'énergie (29);
une unité d'alimentation (27) pour l'alimentation en courant, lequel est produit par ledit au moins un panneau solaire (20, 21) et/ou par ladite au moins une éolienne (30), dans l'unité de stockage d'énergie (29) et/ou dans un réseau d'alimentation électrique (9) de la voie de transport (2);
un convertisseur de courant (25), au moyen duquel les propriétés électriques du courant généré par ledit au moins un panneau solaire (20, 21) et/ou par ladite au moins une éolienne (30) sont adaptées aux besoins de charge ou respectivement d'alimentation de l'unité de stockage d'énergie (29) ou respectivement du réseau d'alimentation électrique (9) de la voie de transport (2);
une unité de commande (28) pour commander les fonctions mécaniques et/ou électriques des composants du système qui sont montés sur le pylône et/ou sur les câbles porteurs;
ladit au moins une première unité de communication (33) et/ou
une seconde unité de communication (26), au moyen de laquelle les données et/ou les instructions de commande peuvent être échangées entre l'unité de commande (28) et une unité centrale de commande située à distance.

8. Système selon la revendication 6, dans lequel l'élément rapporté (10) comporte un boîtier dans lequel sont logés l'unité de stockage d'énergie (29), l'unité d'alimentation (27), le convertisseur de courant (25), l'unité de commande (28), la première unité de communication (33) et/ou la deuxième unité de communication (26).

9. Système selon l'une des revendications 6 à 8, dans lequel la première unité de communication (33) est fixée sur le dessus de chacun desdits pylônes (1) ou sur l'éolienne (30).

10. Système selon l'une des revendications 1 à 8, dans lequel l'élément rapporté (10) présente un profil oblong de forme sensiblement prismatique, de section transversale sensiblement trapézoïdale.

11. Système selon la revendication 10, ledit système comportant au moins un panneau solaire vertical (23) qui est fixé audit élément rapporté (10).

12. Système selon la revendication 11, dans lequel le panneau solaire vertical (23) comporte au moins un élément (24) de réglage, au moyen duquel le panneau solaire vertical (23) est réglable selon une orientation sud fixe ou mobile.
